# EUROPÄISCHE PATENTANMELDUNG

(11) **EP 4 679 697 A1**
(43) Veröffentlichungstag der Anmeldung: **14.01.2026**
(21) Anmeldenummer: 24187700.0
(22) Anmeldetag: 10.07.2024
(51) Int. Cl.: H02M 1/34, H02M 3/335

(54) **SNUBBER FÜR GLEICHSPANNUNGSWANDLER**

(71) Anmelder: AmbiBox GmbH, 55124 Mainz (DE)
(72) Erfinder: EICHHORTS, Dennis, 65203 Wiesbaden (DE)
(74) Vertreter: Hoffmann Eitle

(57) **Zusammenfassung**

Der Erfindung betrifft einen Snubber (2) für Gleichspannungswandler (4) umfassend eine Speichereinheit (6) und ein Entladeelement (8), wobei die Speichereinheit (6) einen ersten Kondensator (10), einen zweiten Kondensator (12), einen steuerbaren Schalter (14) und ein Schaltmittel (16) umfasst, wobei der steuerbare Schalter (14) in Serie mit dem ersten Kondensator (10) verbunden ist, wobei der zweite Kondensator (12) in Serie mit dem Schaltmittel (16) verbunden ist, wobei der erste Kondensator (10) oder der erste Kondensator (10) und der steuerbare Schalter (14) parallel mit dem zweiten Kondensator (12) und dem Schaltmittel (16) verbunden ist, wobei das Entladeelement (8) zum Entladen des zweiten Kondensators (12) ausgebildet ist.

## Beschreibung

### GEBIET DER ERFINDUNG

Die Erfindung betrifft einen Snubber für Gleichspannungswandler und einen Gleichspannungswandler umfassend einen erfindungsgemäßen Snubber.

### STAND DER TECHNIK

Der Gleichspannungswandler wird zur Wandlung von einer am Eingang zugeführten Gleichspannung in eine Gleichspannung mit höherem, niedrigerem oder invertiertem Spannungsniveau eingesetzt. Zur Schaltung und Steuerung des Gleichspannungswandlers werden elektrische Schalter eingesetzt.

Hierbei besteht das Problem, dass bei einer Abschaltung der elektrischen Schalter eine Überspannung im Gleichspannungswandler auftreten kann. Beispielsweise kommutiert bei galvanisch getrennten Gleichspannungswandlern der Strom des Transformators auf die Ausgangsdrossel. Die Überspannung entsteht dabei durch den Strom durch die Streuinduktivitat des Transformators. Der Transformator muss sich durch den durch die Abschaltung entstandenen neuen Strompfad schnell an den Stromwert der Ausgangsdrossel anpassen. Beim Wandeln von Spannung in die andere Richtung entsteht die Überspannung durch den Strom der Zwischenkreisdrossel.

Aufgrund der Überspannung müssen Schalter mit elektrisch höherer Spannungsbelastbarkeit genutzt werden, und die elektromagnetische Verträglichkeit verschlechtert sich. Dies führt zu höheren Kosten.

Eine Alternative ist ein Snubber. Mit dem Snubber kann eine Überspannung reduziert werden. Der Snubber dient dabei zur Dämpfung unerwünschter Schwingungen und Überspannungsspitzen in dem Gleichspannungswandler. Die einfachste Form eines Snubbers ist eine Serienschaltung eines Kondensators und eines Widerstands. Dieser Snubber ist jedoch passiv und erzeugt zusätzliche, sehr hohe Verluste. Es existieren des Weiteren verlustlose, passive Snubber, die die Energie der Überspannung im Freilaufmoment an den Ausgang des Wandlers weitergeben. Diese sind jedoch nicht in bidirektionalen Gleichspannungswandlern einsetzbar.

Bei bidirektionalen Gleichspannungswandlern können aktive Snubber eingesetzt werden, bei denen der Snubber einen elektronischen Schalter und einen Kondensator umfasst. Eine gängige Schaltung ist in US 6,038,142 A offenbart. Hierbei nimmt der Kondensator die Überspannungsenergie im Schaltmoment auf. Nach erfolgter Anpassung der Ströme in den beiden aufeinander geschalteten Induktivitäten kann der elektronische Schalter zugeschaltet werden, um den Kondensator wieder zu entladen. Jedoch kann der Snubber hierbei im Falle einer Abschaltung der elektrischen Schalter, beispielsweise aufgrund einer Notausschaltung, nicht ordnungsgemäß die Überspannung reduzieren. In so einem Fall treten aufgrund ungünstiger Schaltzeitpunkte oder Überströmen deutlich höhere Überspannungen auf, die eine deutlich größere Kapazität im Snubber erfordern, als dies für einen effektiven Normalbetrieb der Fall wäre. Insbesondere resultiert die größere Kapazität in einer niedrigeren Eigenresonanzfrequenz des Snubbers, wodurch es im Snubber zu unerwünschten Schwingungen durch Schaltvorgänge des Gleichspannungswandlers kommt. Die Wirksamkeit des Snubbers kann dadurch bis zur Unbrauchbarkeit herabgesetzt werden. Als naheliegende Gegenmaßname kann die Kapazität durch Parallelschaltung von Kondensatoren mit niedriger Kapazität und niedriger parasitärer Induktivität erreicht werden. Dies erhöht jedoch den Platzbedarf und die Kosten.

Basierend auf diesem Stand der Technik ist es die Aufgabe der Erfindung einen kostengünstigen Snubber bereitzustellen, der sowohl in bidirektionalen Gleichspannungswandlern als auch bei einer Notabschaltung einen zuverlässigen Überspannungsschutz gewährleistet.

### ZUSAMMENFASSUNG DER ERFINDUNG

Gemäß einem ersten Aspekt der Erfindung wird die oben genannte Aufgabe durch einen Snubber für Gleichspannungswandler, insbesondere für bidirektionale Gleichspannungswandler, umfassend eine Speichereinheit und ein Entladeelement gelöst, wobei die Speichereinheit einen ersten Kondensator, einen zweiten Kondensator, einen steuerbaren Schalter und ein Schaltmittel umfasst, wobei der steuerbare Schalter in Serie mit dem ersten Kondensator verbunden ist, wobei der zweite Kondensator in Serie mit dem Schaltmittel verbunden ist, wobei der erste Kondensator oder der erste Kondensator und der steuerbare Schalter parallel mit dem zweiten Kondensator und dem Schaltmittel verbunden ist, und wobei das Entladeelement zum Entladen des zweiten Kondensators ausgebildet ist.

Der erfindungsgemäße Snubber bietet den Vorteil, dass der Snubber kostengünstig ist. Zudem kann der Snubber in bidirektionalen Gleichspannungswandlern eingesetzt werden. Für den Fall einer Notabschaltung und somit auch des Schalters wird die Energie in den zweiten Kondensator geleitet. Dieser besitzt eine ausreichende Kapazität, um die Energie aufzunehmen und die Überspannung zuverlässig zu reduzieren. Die gespeicherte Energie kann anschließend über das Entladeelement abgebaut werden.

Der erste Kondensator kann parallel mit dem zweiten Kondensator und dem Schaltmittel verbunden sein. Auf diese Weise kann die Schaltung besonders einfach und somit der Snubber besonders kostengünstig sein. Hierbei kann der Strom durch den steuerbaren Schalter fließen. Beispielsweise kann der steuerbare Schalter ein MOSFET sein, sodass der steuerbare Schalter immer für den von dem zweiten Kondensator kommenden Strom leitend sein kann. Alternativ kann der erste Kondensator und der steuerbare Schalter parallel mit dem zweiten Kondensator und dem Schaltmittel verbunden sein. Vorteilhafterweise kann auf diese Weise verhindert werden, dass der Strom durch den steuerbaren Schalter fließen kann. Somit kann ein zusätzlicher Widerstand durch den steuerbaren Schalter verhindert werden.

Der Snubber kann eine Überspannung reduzieren. Der Snubber kann dabei unerwünschte Schwingungen und/oder Überspannungsspitzen in dem Gleichspannungswandler dämpfen.

Der Gleichspannungswandler kann eine am Eingang zugeführte Gleichspannung in eine Gleichspannung mit höherem, niedrigerem oder invertiertem Spannungsniveau umwandeln.

Der erste Kondensator und der zweite Kondensator können passive elektrische Bauteile sein. Der erste Kondensator und der zweite Kondensator können die elektrische Ladung des Gleichstromkreises und die damit zusammenhängende Energie statisch in einem elektrischen Feld speichern.

Parallel verbunden kann bedeuten, dass bei zweipoligen elektronischen Bauelementen des Snubbers ihre gleichnamigen Pole jeweils gemeinsam verbunden sind. In Serie verbunden kann bedeuten, dass die elektronischen Bauelemente des Wechselrichters hintereinandergeschaltet sind, sodass sie einen einzigen Strompfad bilden. Zwei elektronische Bauelemente können demnach in Serie geschaltet sein, wenn deren Verbindung keine Abzweigung aufweist.

Die Speichereinheit kann dazu ausgebildet sein, Überspannungen zu speichern und insbesondere über die Zeit abzubauen. Der erste Kondensator kann zur Speicherung von Überspannungen im Normalbetrieb ausgebildet sein. Der zweite Kondensator kann zur Speicherung von Überspannungen bei einer Notabschaltung ausgebildet sein. Beispielsweise kann die Speichereinheit und somit der Snubber in jeder Situation Überspannungen ausgleichen.

Das Entladeelement ist zum Entladen des zweiten Kondensators ausgebildet. Zum Entladen kann die auf dem zweiten Kondensator gespeicherte Ladung über das Entladeelement abgebaut werden. Beispielsweise kann das Entladeelement mit dem zweiten Kondensator elektrisch verbunden sein. Insbesondere kann ein Strom von dem zweiten Kondensator zum Entladeelement fließen.

Der steuerbare Schalter kann ein elektronischer Schalter sein. Der steuerbare Schalter kann zur Steuerung eines Stromflusses zwischen zwei elektrischen Anschlüssen über eine elektrische Steuerspannung ausgebildet sein.

Das Schaltmittel kann zum Steuern eines elektrischen Stroms ausgebildet sein. Das Schaltmittel kann ein passives elektronisches Bauelement sein. Zum Beispiel kann das passive elektronische Bauelement derart ausgebildet sein, dass die Steuerung des Stroms durch das Schaltmittel unveränderlich sein kann. Zum Beispiel kann das passive elektronische Bauelement derart ausgebildet sein, dass die Steuerung des Stroms nicht, beispielsweise durch einen Nutzer oder eine Software, veränderbar sein kann. Das Schaltmittel kann ein aktives elektronisches Bauelement sein. Zum Beispiel kann das aktive elektronische Bauelement derart ausgebildet sein, dass die Steuerung des Stroms durch das Schaltmittel veränderlich ist. Zum Beispiel kann das aktive elektronische Bauelement derart ausgebildet sein, dass die Steuerung des Stroms, beispielsweise durch einen Nutzer oder eine Software, veränderbar sein kann. Beispielsweise kann das Steuern ein Regulieren, ein Verstärken und/oder ein Sperren des elektrischen Stroms umfassen. Das Schaltmittel kann beispielsweise eine Durchlassrichtung und eine Sperrrichtung aufweisen.

In einem Ausführungsbeispiel kann das Entladeelement (8) parallel mit dem zweiten Kondensator (12) verbunden sein, und wobei das Schaltmittel (16) eine Diode (18) sein kann.

Auf diese Weise kann aufgrund der Diode keine zyklische Entladung erfolgen, sondern es kann eine passive Entladung über das Entladeelement erfolgen. Somit kann eine Schwingung durch die Eigenresonanz des Kondensators vermeidbar sein. Da nach einer Notabschaltung das Gerät einige Zeit abgeschaltet sein kann, kann das Entladeelement derart gewählt werden, um im normalen Betrieb keine nennenswerten Verluste erzeugen zu können. Ferner kann auf diese Weise ein Entladen des zweiten Kondensators selbstständig erfolgen, sodass keine weitere Steuerung notwendig sein kann. Mithin kann der Snubber besonders einfach ausgestaltet sein und der Snubber kann autark, also zum Beispiel ohne eine externe Ansteuerung, den zweiten Kondensator entladen.

Die Diode kann ein elektronisches Bauelement auf Halbleiterbasis sein, das elektrischen Strom in einer Richtung passieren lassen kann und in der anderen Richtung sperren kann. Die Diode kann eine Durchlassrichtung und eine Sperrrichtung haben.

In einem Ausführungsbeispiel kann die Serienschaltung aus dem steuerbarem Schalter und dem erstem Kondensator mit einem ersten Knoten an einem ersten Ende der Serienschaltung und einem anderen Knoten an einem anderen Ende der Serienschaltung verbunden sein, und wobei das Entladeelement derart mit dem ersten Knoten und dem anderen Knoten verbunden sein kann, dass das Entladeelement den zweiten Kondensator entladen kann, und wobei das Schaltmittel ein weiterer steuerbarer Schalter sein kann.

Auf diese Weise kann die Entladung des zweiten Kondensators besonders gut kontrollierbar durch den weiteren steuerbaren Schalter sein. Zudem kann ein bereits vorhandenes Entladeelement, wie beispielsweise ein Widerstand im Gleichspannungswandler, genutzt werden. Somit kann kein zusätzliches Entladeelement notwendig sein, sodass der Snubber besonders einfach aufgebaut und kostengünstig sein kann.

Die Serienschaltung aus dem steuerbarem Schalter und dem erstem Kondensator kann dadurch entstehen, dass der steuerbare Schalter in Serie mit dem ersten Kondensator verbunden sein kann.

Der erste Knoten und/oder der andere Knoten können Anschlusspunkte für elektronische Bauelemente sein. Der erste Knoten und/oder der andere Knoten können Verknüpfungen eines Netzes sein. Der erste Knoten und/oder der andere Knoten können Orte sein, an denen eine Stromverzweigung auftreten kann. Eine elektrische Verbindung von dem ersten Knoten zu dem anderen Knoten kann durch die Serienschaltung aus dem steuerbarem Schalter und dem erstem Kondensator bestehen. Zwischen dem ersten Knoten und dem anderen Knoten können entlang einer elektrischen Verbindung nur der steuerbare Schalter und der erste Kondensator angeordnet sein. Beispielsweise können entlang der elektrischen Verbindung nur der steuerbare Schalter und der erste Kondensator aber keine weiteren elektronische Bauelemente angeordnet sein.

Mit dem ersten Knoten oder mit dem anderen Knoten kann direkt der weitere steuerbarer Schalter verbunden sein. Beispielsweise kann zwischen dem weiteren steuerbaren Schalter und dem ersten Knoten oder dem anderen Knoten kein weiteres elektronisches Bauelement angeordnet sein. Zwischen dem ersten Knoten und dem anderen Knoten können entlang einer weiteren elektrischen Verbindung der weitere steuerbare Schalter und der zweite Kondensator angeordnet sein

Das Entladeelement kann derart mit dem ersten Knoten und dem anderen Knoten verbunden sein, dass das Entladeelement den zweiten Kondensator entladen kann. Zum Entladen kann die auf dem zweiten Kondensator gespeicherte Ladung über das Entladeelement abgebaut werden. Beispielsweise kann das Entladeelement mit dem zweiten Kondensator und dem ersten Knoten und dem zweiten Knoten elektrisch verbunden sein.

Beispielsweise können das Entladeelement der zweite Kondensator, der erste Knoten und der zweite Knoten in einem Stromkreis angeordnet sein. Insbesondere kann ein Strom von dem zweiten Kondensator zum Entladeelement fließen.

Der weitere steuerbare Schalter kann ein elektronischer Schalter sein. Der weitere steuerbare Schalter kann zur Steuerung eines Stromfluss zwischen zwei elektrischen Anschlüssen über eine elektrische Steuerspannung ausgebildet sein.

In einem Ausführungsbeispiel kann der weitere steuerbare Schalter ein Transistor, bevorzugt ein MOSFET oder IGBT, sein.

Auf diese Weise kann bei einer Notausschaltung die Überspannung durch den Snubber besonders gut reduziert werden, da der zweite Kondensator mit dem Stromkreis je nach Bedarf verbunden werden kann.

In einem Ausführungsbeispiel kann das Entladeelement ein Widerstand, ein Varistor oder eine Zener-Diode sein.

Auf diese Weise kann das Entladeelement und damit auch der Snubber besonders zuverlässig einen Überspannungsschutz gewährleisten, da die überschüssige Energie auf einfache Weise abgebaut werden kann. Zudem kann der Snubber besonders kostengünstig sein. Der Widerstand kann zudem den Vorteil bieten, dass der Widerstand kostengünstig und somit der Snubber kostengünstig ist.

Der Widerstand kann ein Behinderung für den elektrischen Strom sein. In dem Widerstand kann die elektrische Energie in Wärme umgewandelt werden. Der Varistor kann einen von der elektrischen Spannung abhängigen Widerstand aufweisen. Die Zener-Diode kann eine Diode sein, die darauf ausgelegt sein kann, dauerhaft in Sperrrichtung im Bereich der Durchbruchspannung betrieben zu werden.

In einem Ausführungsbeispiel kann die Kapazität des zweiten Kondensators mindestens zehnmal, bevorzugt mindestens hundertmal, besonders bevorzugt mindestens dreihundertmal, so groß sein wie die Kapazität des ersten Kondensators.

In diesem Fall kann bei einer Notausschaltung die Überspannung durch den Snubber besonders gut reduziert werden.

In einem Ausführungsbeispiel kann der erste Kondensator eine Kapazität von 1-10 nF aufweisen.

In diesem Fall kann im Normalbetrieb die Überspannung durch den Snubber besonders gut reduziert werden.

In einem Ausführungsbeispiel kann der zweite Kondensator eine Kapazität von mindestens 1 µF aufweisen.

In diesem Fall kann die Überspannung bei einer Notausschaltung durch den Snubber besonders gut reduziert werden.

In einem Ausführungsbeispiel kann der steuerbare Schalter ein Transistor, bevorzugt ein MOSFET oder IGBT, sein.

Auf diese Weise kann im Normalbetrieb die Überspannung durch den Snubber besonders gut reduziert werden, da der erste Kondensator mit dem Stromkreis je nach Bedarf verbunden werden kann.

Der Schalter kann mittels eines Halbleiterbauelements eine elektrisch leitende Verbindung herstellen oder trennen. Ein Transistor kann ein elektronisches Halbleiter-Bauelement zum Steuern oder Verstärken elektrischer Spannungen und Ströme sein.

Ein MOSFET (Metall-Oxid-Halbleiter-Feldeffekttransistor) kann ein Transistor sein. Das MOSFET kann ein isoliertes Gate aus einem Oxid aufweisen. Das MOSFET kann ein Feldeffekttransistoren mit isoliertem Gate sein.

Gemäß einem zweiten Aspekt der Erfindung wird die oben genannte Aufgabe durch einen Gleichspannungswandler umfassend einen erfindungsgemäßen Snubber gelöst.

Der erfindungsgemäße Gleichspannungswandler bietet den Vorteil, dass der Gleichspannungswandler kostengünstig ist. Für den Fall einer Notabschaltung und somit auch aller Schalter des Gleichspannungswandlers wird die Energie in den zweiten Kondensator geleitet. Dieser besitzt eine ausreichende Kapazität, um die Energie aufzunehmen und die Spannung zu begrenzen. Aufgrund der Diode erfolgt jedoch keine zyklische Entladung, sondern eine passive Entladung über das Entladeelement. Somit wird eine Schwingung durch die Eigenresonanz des Kondensators vermieden. Da nach einer Notabschaltung das Gerät einige Zeit abgeschaltet ist, kann das Entladeelement derart gewählt werden, um im normalen Betrieb keine nennenswerten Verluste zu erzeugen.

In einem Ausführungsbeispiel kann der Gleichspannungswandler bidirektional sein.

Auf diese Weise können die Einsatzmöglichkeiten des Gleichspannungswandlers erhöht werden. Bidirektional kann bedeuten, dass Leistung in beide Richtungen des Gleichspannungswandlers gewandelt werden kann.

In einem Ausführungsbeispiel kann der Gleichspannungswandler galvanisch getrennt sein.

Die galvanische Trennung kann hierbei die Sicherheit des Gleichspannungswandlers kostengünstig erhöhen.

Weitere Aufgaben, Merkmale, Vorteile und Aspekte der vorliegenden Erfindung werden für den Fachmann aus der folgenden Beschreibung und den beigefügten Ansprüchen ersichtlich. Es sollte jedoch verstanden werden, dass die folgende Beschreibung, die beigefügten Ansprüche und die spezifischen Beispiele, die bevorzugte Ausführungsformen der Anwendung zeigen, nur zur Veranschaulichung gegeben werden. Verschiedene Änderungen und Modifikationen im Rahmen des Geistes und des Umfangs der offengelegten Erfindung werden dem Fachmann beim Lesen der folgenden Ausführungen ohne weiteres einleuchten.

### DEFINITIONEN

Die folgenden Ausdrücke haben im Allgemeinen vorzugsweise die nachstehend aufgeführten Bedeutungen, sofern sich aus dem Kontext, in dem sie verwendet werden, nichts anderes ergibt.

Der hier verwendete Ausdruck "umfassen" schließt neben seiner wörtlichen Bedeutung auch die Ausdrücke "im Wesentlichen bestehen aus" und "bestehen aus" ein und bezieht sich speziell auf diese. Somit bezieht sich der Ausdruck "umfassen" sowohl auf Ausführungsformen, bei denen der Gegenstand, der speziell aufgeführte Elemente "umfasst", keine weiteren Elemente umfasst, als auch auf Ausführungsformen, bei denen der Gegenstand, der speziell aufgeführte Elemente "umfasst", weitere Elemente umfassen kann und/oder tatsächlich umfasst. Ebenso ist der Ausdruck "haben" als der Ausdruck "umfassen" zu verstehen, der auch die Ausdrücke "im Wesentlichen bestehen aus" und "bestehen aus" einschließt und sich auf diese bezieht. Der Ausdruck "bestehen im Wesentlichen aus" bezieht sich, soweit möglich, insbesondere auf Ausführungsformen, bei denen der Gegenstand neben den spezifisch aufgeführten Elementen, aus denen der Gegenstand im Wesentlichen besteht, 20 % oder weniger, insbesondere 15 % oder weniger, 10 % oder weniger oder insbesondere 5 % oder weniger weitere Elemente umfasst.

### FIGUREN

- Fig. 1: ein Schaltbild eines Snubbers.
- Fig. 2: ein Schaltbild eines Snubbers.
- Fig. 3: ein Schaltbild eines Snubbers.
- Fig. 4: ein Schaltbild eines Snubbers.
- Fig. 5: einen Teil des Schaltbildes eines Gleichspannungswandlers.
- Fig. 6: einen Teil des Schaltbildes eines Gleichspannungswandlers.
- Fig. 7: einen Teil des Schaltbildes eines Gleichspannungswandlers.
- Fig. 8: einen Teil des Schaltbildes eines Gleichspannungswandlers.

### SPEZIELLE BESCHREIBUNG

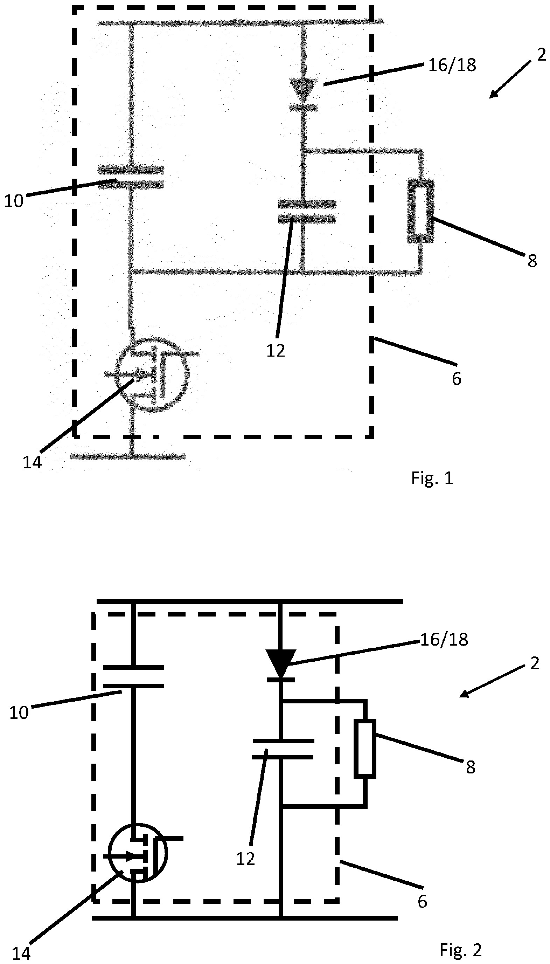

Fig. 1 zeigt ein Schaltbild eines Snubbers 2.

Der Snubber 2 für Gleichspannungswandler 4 umfasst eine Speichereinheit 6 und ein Entladeelement 8. Die Speichereinheit 6 umfasst einen ersten Kondensator 10, einen zweiten Kondensator 12, einen steuerbaren Schalter 14 und ein Schaltmittel 16. Der steuerbare Schalter 14 ist in Serie mit dem ersten Kondensator 10 verbunden. Der zweite Kondensator 12 ist in Serie mit dem Schaltmittel 16 verbunden. Der erste Kondensator 10 ist parallel mit dem zweiten Kondensator 12 und dem Schaltmittel 16 verbunden. Das Entladeelement 8 ist zum Entladen des zweiten Kondensators 12 ausgebildet.

Das Entladeelement 8 ist parallel mit dem zweiten Kondensator 12 verbunden und das Schaltmittel 16 ist eine Diode 18.

Das Entladeelement 8 ist ein Widerstand. Alternativ kann das Entladeelement 8 ein Varistor oder eine Zener-Diode sein. Die Kapazität des zweiten Kondensators 12 ist mindestens dreihundertmal so groß ist wie die Kapazität des ersten Kondensators 10.

Der erste Kondensator 10 weist eine Kapazität von 1-10 nF auf. Der zweite Kondensator 12 weist eine Kapazität von mindestens 1 µF auf. Der steuerbare Schalter 14 ist ein Transistor, nämlich ein MOSFET. Alternativ kann der steuerbare Schalter 14 auch ein IGBT sein.

Fig. 2 zeigt ein Schaltbild eines weiteren Snubbers 2.

Der Snubber 2 für Gleichspannungswandler 4 umfasst eine Speichereinheit 6 und ein Entladeelement 8. Die Speichereinheit 6 umfasst einen ersten Kondensator 10, einen zweiten Kondensator 12, einen steuerbaren Schalter 14 und ein Schaltmittel 16. Der steuerbare Schalter 14 ist in Serie mit dem ersten Kondensator 10 verbunden. Der zweite Kondensator 12 ist in Serie mit dem Schaltmittel 16 verbunden. Der erste Kondensator 10 und der steuerbare Schalter 14 sind parallel mit dem zweiten Kondensator 12 und dem Schaltmittel 16 verbunden. Das Entladeelement 8 ist zum Entladen des zweiten Kondensators 12 ausgebildet. Das Entladeelement 8 ist parallel mit dem zweiten Kondensator 12 verbunden und das Schaltmittel 16 ist eine Diode 18.

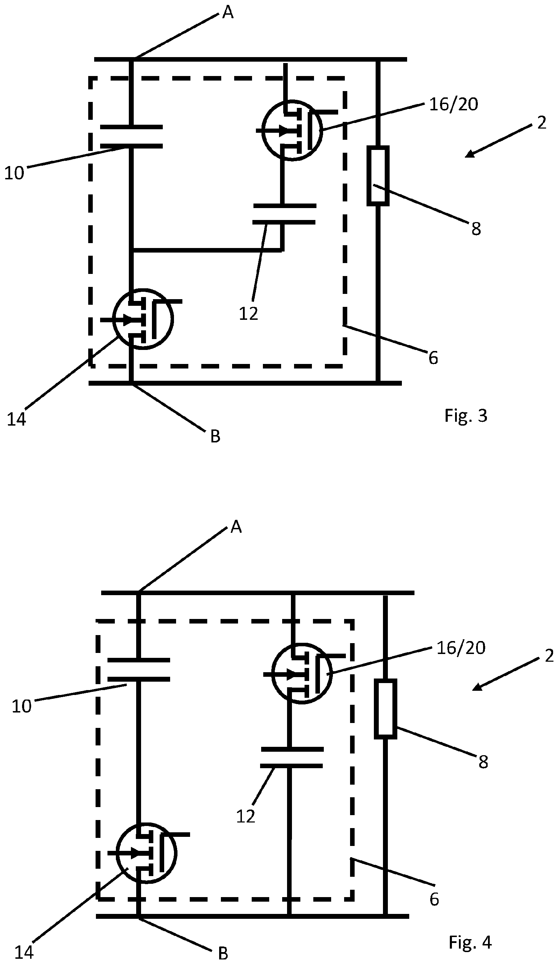

Fig. 3 zeigt ein Schaltbild eines weiteren Snubbers 2. Der Snubber 2 für Gleichspannungswandler 4 umfasst eine Speichereinheit 6 und ein Entladeelement 8. Die Speichereinheit 6 umfasst einen ersten Kondensator 10, einen zweiten Kondensator 12, einen steuerbaren Schalter 14 und ein Schaltmittel 16. Der steuerbare Schalter 14 ist in Serie mit dem ersten Kondensator 10 verbunden. Der zweite Kondensator 12 ist in Serie mit dem Schaltmittel 16 verbunden. Der erste Kondensator 10 ist parallel mit dem zweiten Kondensator 12 und dem Schaltmittel 16 verbunden. Das Entladeelement 8 ist zum Entladen des zweiten Kondensators 12 ausgebildet.

Die Serienschaltung aus dem steuerbarem Schalter 14 und dem erstem Kondensator 10 ist mit einem ersten Knoten A an einem ersten Ende der Serienschaltung und einem anderen Knoten B an einem anderen Ende der Serienschaltung verbunden. Das Entladeelement 8 ist derart mit dem ersten Knoten A und dem anderen Knoten B verbunden, dass das Entladeelement 8 den zweiten Kondensator 12 entladen kann. Das Schaltmittel 16 ist ein weiterer steuerbarer Schalter 20.

Der weitere steuerbare Schalter 20 ist ein Transistor. Wie in Fig. 3 zu sehen ist der weitere steuerbare Schalter 20 ein MOSFET. Alternativ kann der weitere steuerbare Schalter 20 ein IGBT sein.

Fig. 4 zeigt ein Schaltbild eines weiteren Snubbers 2. Der Snubber 2 für Gleichspannungswandler 4 umfasst eine Speichereinheit 6 und ein Entladeelement 8. Die Speichereinheit 6 umfasst einen ersten Kondensator 10, einen zweiten Kondensator 12, einen steuerbaren Schalter 14 und ein Schaltmittel 16. Der steuerbare Schalter 14 ist in Serie mit dem ersten Kondensator 10 verbunden. Der zweite Kondensator 12 ist in Serie mit dem Schaltmittel 16 verbunden. Der erste Kondensator 10 und der steuerbare Schalter 14 sind parallel mit dem zweiten Kondensator 12 und dem Schaltmittel 16 verbunden. Das Entladeelement 8 ist zum Entladen des zweiten Kondensators 12 ausgebildet.

Die Serienschaltung aus dem steuerbarem Schalter 14 und dem erstem Kondensator 10 ist mit einem ersten Knoten A an einem ersten Ende der Serienschaltung und einem anderen Knoten B an einem anderen Ende der Serienschaltung verbunden. Das Entladeelement 8 ist derart mit dem ersten Knoten A und dem anderen Knoten B verbunden, dass das Entladeelement 8 den zweiten Kondensator 12 entladen kann. Das Schaltmittel 16 ist ein weiterer steuerbarer Schalter 20.

Der weitere steuerbare Schalter 20 ist ein Transistor. Wie in Fig. 4 zu sehen ist der weitere steuerbare Schalter 20 ein MOSFET. Alternativ kann der weitere steuerbare Schalter 20 ein IGBT sein.

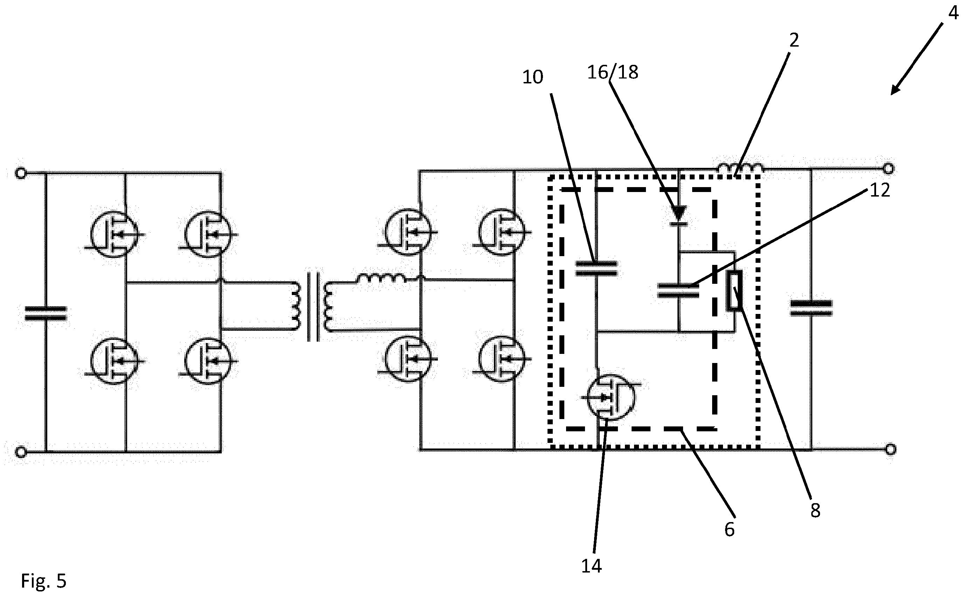

Fig. 5 zeigt einen Teil des Schaltbildes eines Gleichspannungswandlers 4. Der Gleichspannungswandler 4 umfasst einem Snubber 2. Der Snubber 2 in Fig. 5 entspricht dem Snubber 2 in Fig. 1, sodass für die Details auf die Beschreibung zu Fig. 1 verwiesen wird.

Der Gleichspannungswandler 4 ist bidirektional. Zudem ist der Gleichspannungswandler 4 galvanisch getrennt.

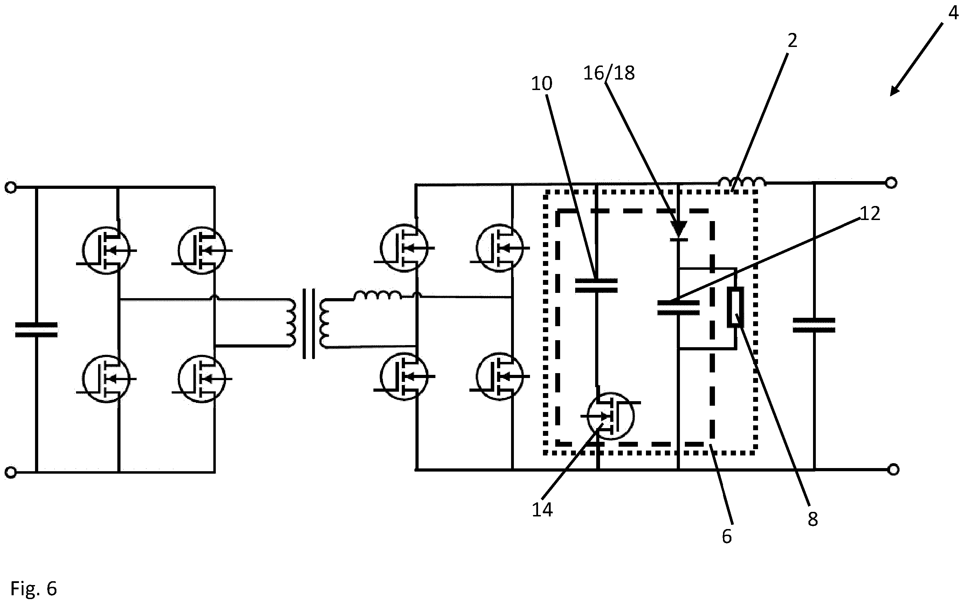

Fig. 6 zeigt einen Teil des Schaltbildes eines Gleichspannungswandlers 4. Der Gleichspannungswandler 4 umfasst einem Snubber 2. Der Snubber 2 in Fig. 6 entspricht dem Snubber 2 in Fig. 2, sodass für die Details auf die Beschreibung zu Fig. 2 verwiesen wird. Der Gleichspannungswandler 4 ist bidirektional.

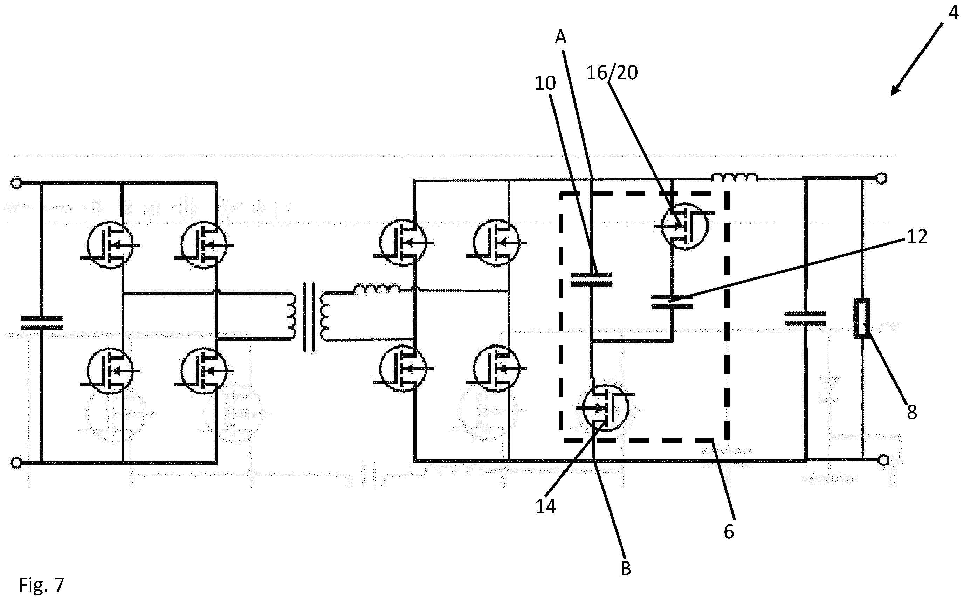

Fig. 7 zeigt einen Teil des Schaltbildes eines Gleichspannungswandlers. Der Gleichspannungswandler 4 umfasst einem Snubber 2. Der Snubber 2 in Fig. 7 entspricht dem Snubber 2 in Fig. 3, sodass für die Details auf die Beschreibung zu Fig. 3 verwiesen wird. Der Gleichspannungswandler 4 ist bidirektional.

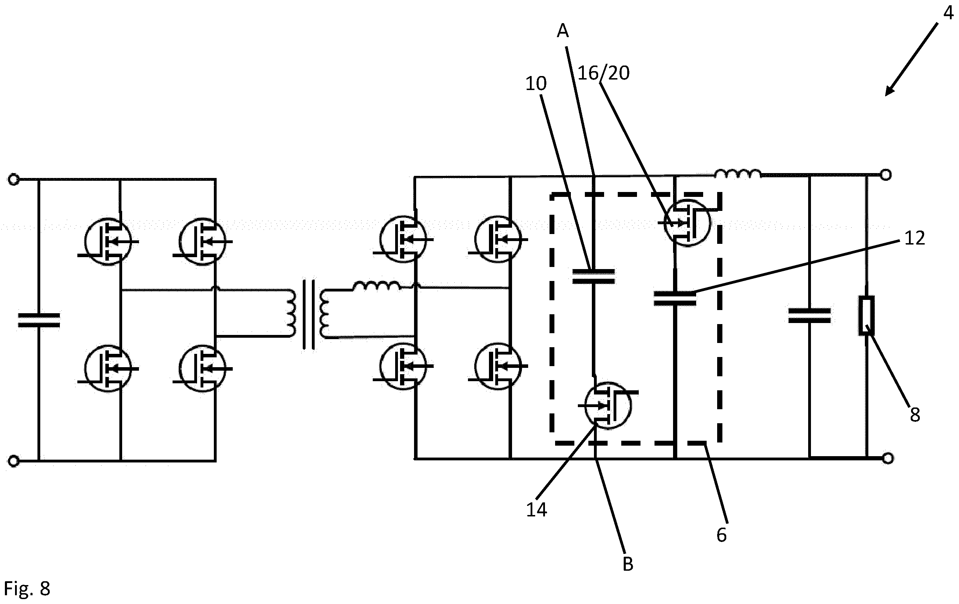

Fig. 8 zeigt einen Teil des Schaltbildes eines Gleichspannungswandlers. Der Gleichspannungswandler 4 umfasst einem Snubber 2. Der Snubber 2 in Fig. 8 entspricht dem Snubber 2 in Fig. 4, sodass für die Details auf die Beschreibung zu Fig. 4 verwiesen wird. Der Gleichspannungswandler 4 ist bidirektional.

## Patentansprüche

1. Snubber (2) für Gleichspannungswandler (4), insbesondere für bidirektionale Gleichspannungswandler, umfassend eine Speichereinheit (6) und ein Entladeelement (8),
wobei die Speichereinheit (6) einen ersten Kondensator (10), einen zweiten Kondensator (12), einen steuerbaren Schalter (14) und ein Schaltmittel (16) umfasst, wobei der steuerbare Schalter (14) in Serie mit dem ersten Kondensator (10) verbunden ist,
wobei der zweite Kondensator (12) in Serie mit dem Schaltmittel (16) verbunden ist, wobei der erste Kondensator (10) oder der erste Kondensator (10) und der steuerbare Schalter (14) parallel mit dem zweiten Kondensator (12) und dem Schaltmittel (16) verbunden ist,
wobei das Entladeelement (8) zum Entladen des zweiten Kondensators (12) ausgebildet ist.

2. Snubber nach Anspruch 1
**dadurch gekennzeichnet, dass**
das Entladeelement (8) parallel mit dem zweiten Kondensator (12) verbunden ist, und wobei das Schaltmittel (16) eine Diode (18) ist.

3. Snubber nach Anspruch 1
**dadurch gekennzeichnet, dass**
die Serienschaltung aus dem steuerbarem Schalter (14) und dem erstem Kondensator (10) mit einem ersten Knoten (A) an einem ersten Ende der Serienschaltung und einem anderen Knoten (B) an einem anderen Ende der Serienschaltung verbunden ist, wobei das Entladeelement (8) derart mit dem ersten Knoten (A) und dem anderen Knoten (B) verbunden ist, dass das Entladeelement (8) den zweiten Kondensator (12) entladen kann, und
wobei das Schaltmittel (16) ein weiterer steuerbarer Schalter (20) ist.

4. Snubber nach Anspruch 3,
**dadurch gekennzeichnet, dass**
der weitere steuerbare Schalter (20) ein Transistor, bevorzugt ein MOSFET oder IGBT, ist.

5. Snubber nach einem der Ansprüche 1 bis 4,
**dadurch gekennzeichnet, dass**
das Entladeelement (8) ein Widerstand, ein Varistor oder eine Zener-Diode ist.

6. Snubber nach einem der Ansprüche 1 bis 5,
**dadurch gekennzeichnet, dass**
die Kapazität des zweiten Kondensators (12) mindestens zehnmal, bevorzugt mindestens hundertmal, besonders bevorzugt mindestens dreihundertmal, so groß ist wie die Kapazität des ersten Kondensators (10).

7. Snubber nach einem der Ansprüche 1 bis 6,
**dadurch gekennzeichnet, dass**
der erste Kondensator (10) eine Kapazität von 1-10 nF aufweist.

8. Snubber nach einem der Ansprüche 1 bis 7,
**dadurch gekennzeichnet, dass**
der zweite Kondensator (12) eine Kapazität von mindestens 1 µF aufweist.

9. Snubber nach einem der Ansprüche 1 bis 8,
**dadurch gekennzeichnet, dass**
der steuerbare Schalter (14) ein Transistor, bevorzugt ein MOSFET oder IGBT, ist.

10. Gleichspannungswandler (4) umfassend einen Snubber (2) nach einem der vorherigen Ansprüche.

11. Gleichspannungswandler nach Anspruch 10,
**dadurch gekennzeichnet, dass**
der Gleichspannungswandler (4) bidirektional ist.

12. Gleichspannungswandler nach Anspruch 10 oder 11
**dadurch gekennzeichnet, dass**
der Gleichspannungswandler (4) galvanisch getrennt ist.
